# EUROPEAN PATENT APPLICATION

(11) **EP 2 846 188 A1**
(43) Date of publication of application: **11.03.2015**
(21) Application number: 13306204.2
(22) Date of filing: 04.09.2013
(51) Int. Cl.: G03B 21/11, G06K 17/00, H04N 5/84, G03G 15/22, H04N 1/32

(54) **Method and apparatus for storing data**

(71) Applicant: Thomson Licensing, 92130 Issy-les-Moulineaux (FR)
(72) Inventor: Blawat, Meinolf, 30659 Hannover (DE); Jax, Peter, 30559 Hannover (DE); Spille, Jens, 30966 Hemmingen (DE); Chen, Xiaoming, 30165 Hannover (DE)
(74) Representative: Schmidt-Uhlig, Thomas

(57) **Abstract**

A method and an apparatus (30) for storing data as a coded two-dimensional pattern (1, 6) of pixels (2) on a photographic medium (27) are described. An image (3) representative of the data to be stored is divided (11) a into a two-dimensional array of blocks (4). A representative color value is determined (12) for each block (4) to obtain a two-dimensional array of representative blocks (5). At least part of the data to be stored is coded (13) such that the resulting coded two-dimensional pattern (6) of pixels (2) resembles the two-dimensional array of representative blocks (5). The coded data are printed (14) onto the photographic medium (27).

## Description

### FIELD OF THE INVENTION

The invention relates to a method and an apparatus for storing data, and more specifically to a method and an apparatus for storing data on a photographic medium in the form of a bit pattern.

### BACKGROUND OF THE INVENTION

It is commonly recognized that polyester based modern photochemical microfiches as well as films may carry information printed on their optical reactive emulsions for very long periods. Therefore, one possible solution for long-term archival of data, e.g. of movies, photographs, etc., is to print the analog data directly onto such microfiches or films.

As an alternative, the so-called Bits-on-Film technology has been developed, which allows to store data in digital form on photographic media. For example, the article c. Voges et al.: "Technology and Applications of Digital Data Storage on Microfilm", J. Imag. Sci. Tech., Vol. 53 (2009), pp. 060505-1 - 060505-8, describes the technology of digital data storage on microfilm. The Bits-on-Film technology consists in printing tiny black-and-white, grey, or colored square pixels on a photographic medium, e.g. on a microfiche or a film. Each pixel represents stored information. Typically, blocks of pixels are printed. The blocks consist of pixels that are arranged as a regular sequence of lines, which in combination form a square or a rectangle. A block is thus printed as a checkered pattern. The stored data can be retrieved by scanning and subsequently analyzing the printed pattern.

Unfortunately, the printed pattern does not allow to easily determine what is actually stored in the pattern. Such a feature is, however, commonly demanded by archiving professionals, who would prefer to be able to obtain information about the stored data with the naked eye. For this purpose it has been proposed to archive an analog copy of an image together with a digitally encoded copy of the image on the same microfilm. See, for example, D. Fluck: "Ausbelichtung digitaler Daten auf Farbmikrofilm: Neue Moglichkeiten und Kostenperspektiven für die Langzeitarchivierung", presentation at the Recom Symposion Stuttgart 2007 ("Print of digital data to color microfilm: New opportunities and cost prospects for long-term archival on color microfilm"; available at http://www.recom-art.de). Though this approach allows to easily gain an idea about what is stored in the pattern of pixel, it comes at the cost of a reduced storage capacity of the microfilm.

### SUMMARY OF THE INVENTION

It is thus an object of the present invention to propose a solution for storing data as a pattern of pixels on a photographic medium, which allows to easily gain information about the stored data without reducing the storage capacity of the photographic medium.

According to the invention, a method for storing data as a coded two-dimensional pattern of pixels on a photographic medium comprises the steps of:
- dividing an image representative of the data to be stored into a two-dimensional array of blocks;
- determining a representative color value for each block to obtain a two-dimensional array of representative blocks;
- coding at least part of the data to be stored such that the resulting coded two-dimensional pattern of pixels resembles the two-dimensional array of representative blocks, and
- printing the coded data onto the photographic medium.

Accordingly, an apparatus configured to store data as a coded two-dimensional pattern of pixels on a photographic medium comprises:
- an image analyzer configured to divide an image representative of the data to be stored into a two-dimensional array of blocks;
- a block analyzer configured to determine a representative color value for each block to obtain a two-dimensional array of representative blocks;
- an encoder configured to code at least part of the data to be stored such that the resulting coded two-dimensional pattern of pixels resembles the two-dimensional array of representative blocks, and
- a data recorder configured to print the coded data onto the photographic medium.

Similarly, a computer readable storage medium has stored therein instructions enabling storing data as a coded two-dimensional pattern of pixels on a photographic medium, which when executed by a computer, cause the computer to:
- divide an image representative of the data to be stored into a two-dimensional array of blocks;
- determine a representative color value for each block to obtain a two-dimensional array of representative blocks;
- code at least part of the data to be stored such that the resulting coded two-dimensional pattern of pixels resembles the two-dimensional array of representative blocks, and
- print the coded data onto the photographic medium.

The proposed solution allows to store digital images on common microfiches or films based on the bits on film technology. However, in contrast to known solutions the stored digital images are recognizable by the naked eye without any technical aids. The solution thus satisfies a need often formulated by professionals.

Advantageously, the representative image is one of an image to be stored, a selected image of a sequence of images to be stored, and an image describing the content of the data to be stored. Depending of the data to be stored, either of these images may be best suited for describing the stored content.

Preferably, the representative color value of a block is mean luminance value of the block. The mean luminance value of a block can easily be determined with limited computational effort. At the same time representing the blocks only by their mean luminance value allows to recognize the original image from the stored data. For this purpose the resulting coded two-dimensional pattern of pixels resembles the two-dimensional array of representative blocks in the sense that areas of the coded two-dimensional pattern of pixels have similar luminance mean values as the representative blocks corresponding to these areas.

Favorably, the coded two-dimensional pattern of pixels is one of a pattern of black and white pixels, a pattern of pixels with different grey values, and a pattern of pixels with different color values. While black and white pixels can most reliably be read and decoded, pixels with different grey values or different color values allow achieving a higher data density.

According to one aspect of the invention, during coding a two-dimensional pattern of pixels resulting from channel modulation and error correction coding is superimposed on the two-dimensional array of representative blocks. This approach can easily be implemented, as no special coding scheme is required.

According to another aspect of the invention, a special coding scheme is employed, which is chosen such that the mean-value of all code words representing the stored data in an area of the two-dimensional pattern of pixels corresponding to a block equals or comes close to the representative color value of said block. This special coding scheme together with its corresponding error correction coding ensures that if an image is appropriately divided into blocks, the tiny squares representing the digital data samples generate the same visual impression as the mean values of the corresponding blocks of the original image.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: shows a block of data printed on film as a checkered pattern of black-and-white pixels representing digital data,
- Fig. 2: shows a block of data printed on film as a checkered pattern of pixels with different grey values representing digital data,
- Fig. 3: depicts an original image, which has been divided into regular square blocks,
- Fig. 4: shows the image of Fig. 3, where all blocks are represented by their grey mean-values,
- Fig. 5: shows the image of Fig. 3, where all blocks are represented by their grey mean-values and the block size is doubled compared to Fig. 4,
- Fig. 6: depicts the image of Fig. 3 stored in digital form with blocks of checkered patterns, where the perceivable luminance mean-values of the blocks allow to recognize the stored image,
- Fig. 7: shows an enlarged section of Fig. 6,
- Fig. 8: depicts a further enlarged section of Fig. 7,
- Fig. 9: illustrates data stored as a pattern of pixels with different grey values, where a part of the pattern allows to recognize a representative image,
- Fig. 10: schematically shows a method according to the invention for storing data on a photographic medium,
- Fig. 11: illustrates an apparatus adapted to implement a solution according to the invention for storing data,
- Fig. 12: shows an image to be archived,
- Fig. 13: depicts a channel encoded image with parity information,
- Figs. 14-17: show four images resulting from mapping each byte in the channel encoded image of Fig. 13 to four pixels.

### DETAILED DESCRIPTION OF PREFERED EMBODIMENTS

The Bits-on-Film technology consists in printing tiny black-and-white, grey, or colored square pixels on a photographic medium, e.g. on a film or a microfiche. Each pixel represents stored information. Typically, blocks of pixels are printed. The blocks consist of pixels that are arranged as a regular sequence of lines, which in combination form a square or a rectangle. A block is thus printed as a checkered pattern. The stored data can be retrieved by scanning and subsequently analyzing the printed pattern.

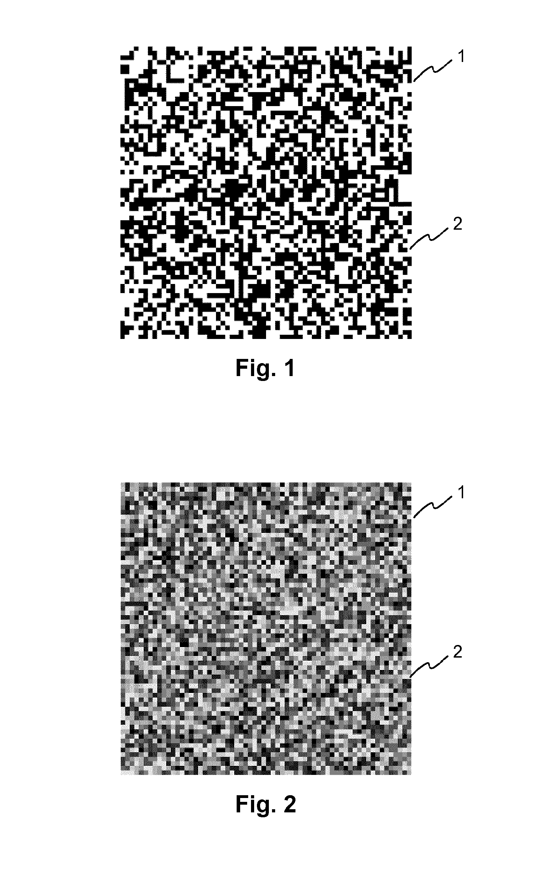

Fig. 1 shows a block 1, i.e. a checkered pattern, printed on a common 35 mm gauge movie film using black-and-white pixels 2. In this case each pixel corresponds exactly to one bit. For instance, a white pixel may represent a logical "0", whereas consequently a black pixel then represents a logical "1".

Fig. 2 shows a block 1, i.e. a checkered pattern, printed on a common 35 mm gauge movie film using pixels 2 with differentiable grey values. In this case each grey value represents certain bits of information. For example, if eight grey values can be distinguished then three bits are stored with each grey pixel (2³=8). The same holds if the pixels show differentiable colors, where the number of discriminable colors defines the number of bits per pixel.

Like every data storage technology, the Bits-on-Film technology is to a certain extent prone to errors. The error rate, or, in other words, the amount of incorrectly recovered data, increases mainly if the size of the information carrying pixels gets smaller than a certain extension, typically about 4µm, and if the number of grey levels exceeds a certain value, in which case the different levels cannot always be reliably distinguished. When the printed films are getting older the above mentioned effects get worse. Unfortunately, the achievable storage density depends directly on these two characteristic parameters of the Bits-on-Film technology. If the pixel size decreases by a certain factor, then the resulting storage density increases with the power of two of the same factor. Likewise, if the number of the printed grey levels or color steps increases by a certain factor, then the storage density increases by the logarithmic value of the increasing factor. For example, let's assume that eight grey levels or color steps are used. If the levels or steps are increased by a factor of four, then the storage density per printed pixel increases as follows: The initial eight levels per pixel correspond to three bit of information (3=log₂(8)). Increasing the levels by the factor of four means 32 levels per pixels, which corresponds to five bit of information (log₂(8×4)=log₂(8)+log₂(4)=3+2=5).

Common analog film printers are optimized for printing high quality analog images on film. High image quality here means that a skilled observer will hardly discover any discrepancies between the original and the print on film, assuming that a suitable viewing device is used. Unfortunately, even though already today analog images are digitized with a color resolution of 256 colors per color component before printing, these modern laser film printers cannot readily be deployed to print digital data directly on film. The resulting error rates would simply be way too high. Also if a digital image represented by pulse coded modulation (PCM) samples is printed by such a laser printer, the error rate remains too high, even if the image resolution fits well to the printed film gauge or the film dimensions. A high error rate here means that a re-scanning of a printed image leads to a high number of faulty recovered pixels, though mainly just the least significant bits of the pixels are affected. In other words, the grey values or color values of the recovered pixels notably differentiate from the original pixels.

The main way to reduce the resulting error rate to an acceptable level is to ensure that the printed pixels are not too small and that only a moderate number of grey levels or color levels is used. In addition, however, a dedicated error correction code (ECC) is advantageously applied, which allows to correct errors to a certain extent. Unfortunately, a disadvantage of the signal processing steps that need to be applied to the data before printing is that the printed digital images can no longer be recognized by the naked eye.

In the following an enhanced solution for the Bits-on-Film technology shall be described with reference to the storage of digital or digitized images. However, the solution is likewise applicable to the storage of other digital data, for which a representative or meaningful image can be determined. For the sake of simplicity, the explanation will be limited to black-and-white images or multi grey tone images. However, the invention is likewise applicable to color images. As a remark, the term "black-and-white images" is often used to classify images which are rendered with pixels showing much more than just two levels of distinguishable grey tones. Here, however, "black-and-white images" refers to images having only bi-tonal pixels. Further, it is also assumed that the images have been regularly sampled, meaning that the samples are equidistantly located throughout the whole image. Both assumptions do not limit the generality of the following description.

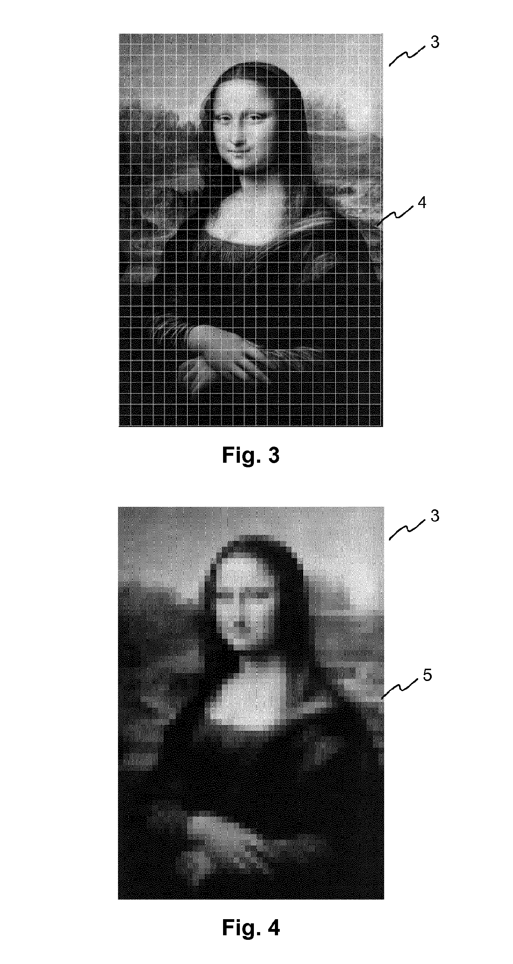

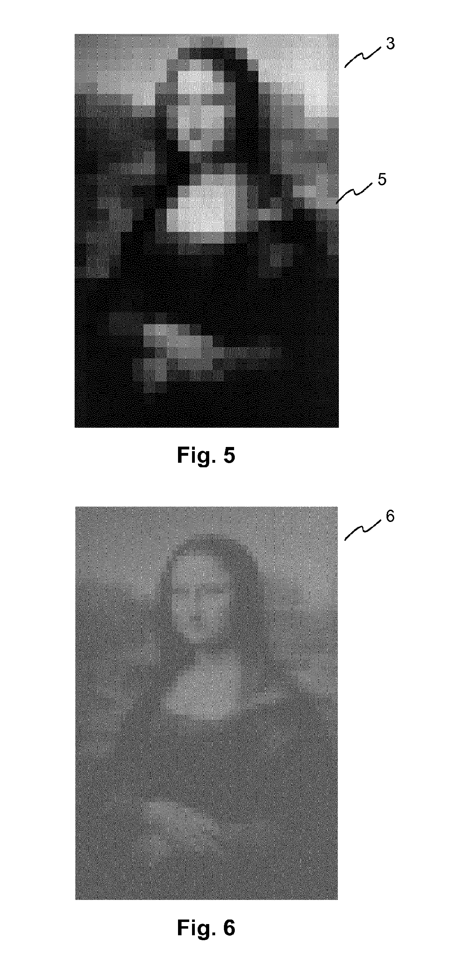

Fig. 3 shows an exemplary original image 3, which has been divided into regular square blocks 4. Figs. 4 and 5 depict the image 3 of Fig. 3, where all blocks 4 are represented by their grey mean-values, i.e. where the blocks 4 are replaced by representative blocks 5. Although apparently the details of the original image 3 are lost, an observer can still recognize the original image content with the naked eye, i.e. without any technical means. In this way an often repeated demand by professional archivists is taken care of. This is even the case for Fig. 5, where the size of the blocks 5 has been doubled compared to Fig. 4, which causes a much coarser rendered image. Whether such an image 3, which has been divided into coarse blocks, can be correctly recognized depends on several factors:
- The size of the printed image 3; the size of the printed image is limited due to the size of the film or microfiche.
- The viewing distance; an optical magnification by technical means, e.g. a magnifying glass, alters the viewing distance correspondingly.
- The size of the blocks 4, 5.

In the following it is assumed that the blocks 4, 5 of the image 3 have just the right size so that the original image can just be correctly recognized.

As already mentioned the original digital data to be stored have to be adapted to the storage media and also have to be protected against errors. Due to the channel modulation and the unavoidable error correction codes the finally printed digital patterns formed out of black-and-white or grey tiny squares show a seemingly random pattern, as it has been illustrated in Figs. 1 and 2. However, according to the invention a well adapted channel modulation together with a dedicated error correction is applied to the digital data, which yields the visual impression that the perceivable grey mean-value of each printed block of pixels is close to the original mean-value of each block of the original image 3 or the determined representative image for the stored data. As a result, the original image or the determined representative image is still recognizable.

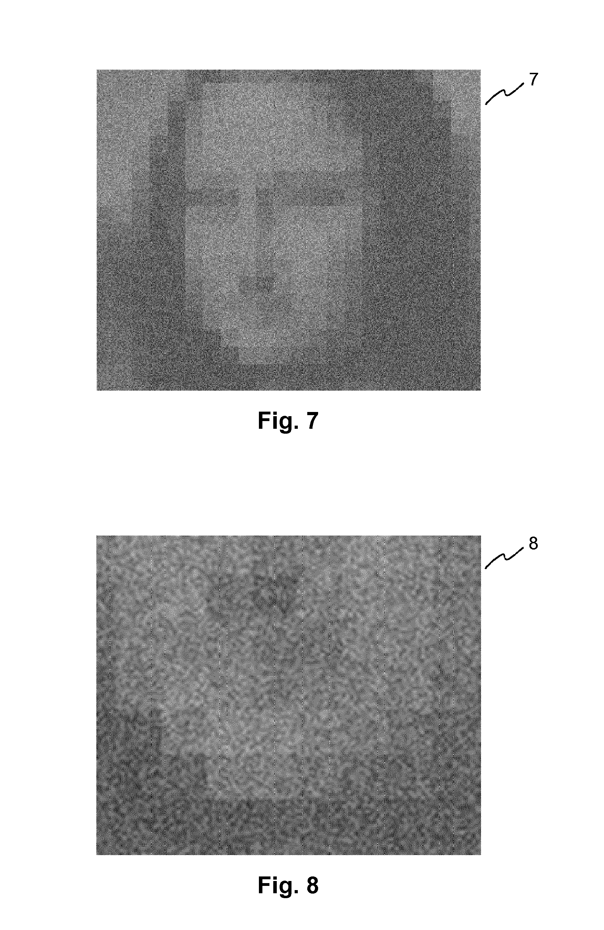

The effect of an adapted channel modulation and a suitable error correction code is apparent from Fig. 6, which shows the coded two-dimensional pattern of pixels 6 representing the stored data, and in more detail in Figs. 7 and 8, which show enlarged sections 7, 8 of the coded two-dimensional pattern of pixels 6. Though the areas corresponding to the blocks 4 of the original image 3 are now formed out of tiny grey pixels representing the stored digital data, in each such area the visual impression of the original luminance mean-value of the corresponding block 4 is maintained. As a result the original image 3 remains recognizable despite the channel modulation and the error correction coding.

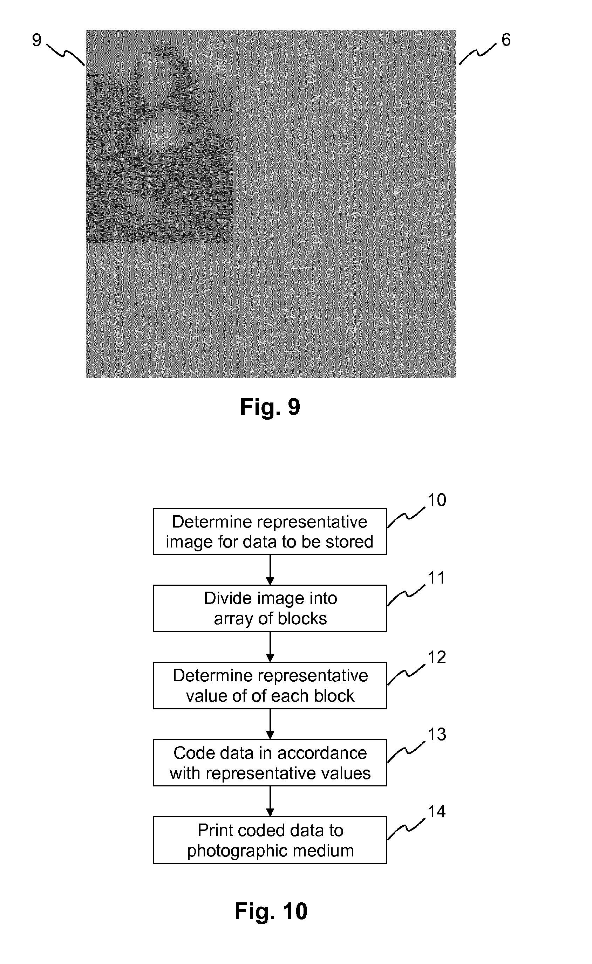

In Fig. 6 the complete two-dimensional data pattern 6 is used to visualize the original image 3. This is, however, not necessarily the case. Fig. 9 illustrates data stored as a pattern of pixels with different grey values, where only a part 9 of the pattern is used to visualize a representative image. This is especially useful if larger amounts of data are stored with a single or maybe a few representative images. For example, an image sequence may be stored as a two-dimensional data pattern. In such a case only the first image may be visualized, or the first image following each scene cut or the like.

A method according to the invention for storing data on a photographic medium is schematically shown in Fig. 10. In a first step a representative image is determined 10 for the data to be stored. This representative image is then divided 11 into an array of blocks. For each block a representative value is determined 12, e.g. a representative color value. The determined representative values are taken into account when subsequently the data to be stored are coded 13, i.e. modulated in accordance with the employed channel modulation and provided with an error correction code. Finally, the coded data are printed 14 to the photographic medium.

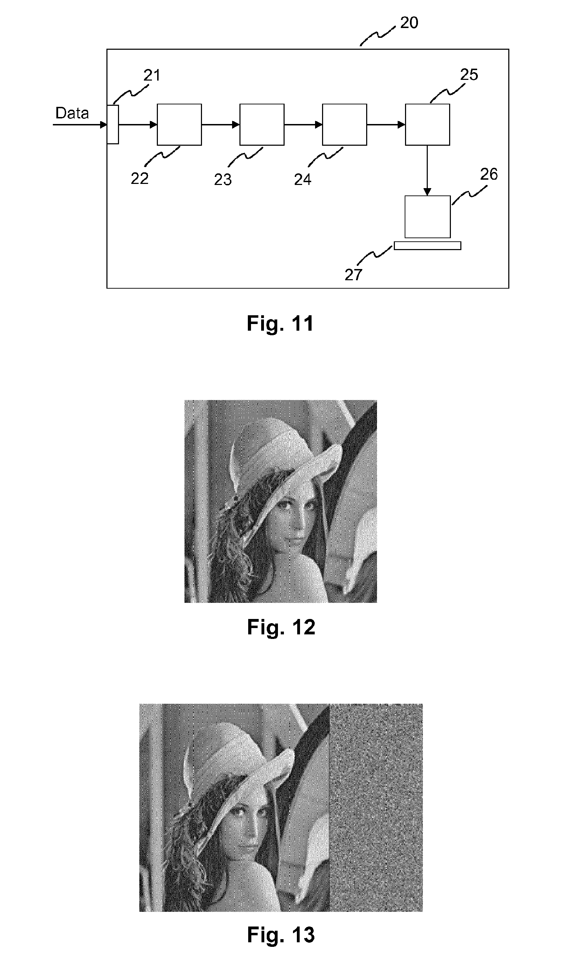

Fig. 11 schematically illustrates an apparatus 20 adapted to implement a solution according to the invention for storing data on a photographic medium. The apparatus has an input 21 for receiving data to be stored. A data analyzer 22 determines 10 a representative image for the data to be stored. An image analyzer 23 divides 11 this representative image into an array of blocks. A block analyzer 24 determines 12 a representative value for each block. An encoder 25 takes the determined representative values into account when coding 13 the data to be stored. A film printer or data recorder 26 prints 14 the coded data to a photographic medium 27. Of course, the various units of the apparatus 20 may likewise be combined or partially combined into a single unit or implemented as software running on a processor.

In the following two exemplary solutions for realizing a channel modulation and error correction coding with the required characteristics shall be described.

A first solution consists in simply overlaying the checkered pattern resulting from channel modulation and error correction coding on the luminance mean-values of each block. In this case it is sufficient to ensure that the resulting minimal and maximal luminance values that need to be printed on the film do not exceed the linear printable range of the deployed film.

A second, more sophisticated and more effective solution in terms of coding efficiency, consists in choosing an adequate channel modulation together with a corresponding error correction coding. They need to be chosen such that they meet the constraint that the mean-value of all code words representing the stored data within a block of data equals or comes close to the perceivable luminance mean-value of the blocks of the image.

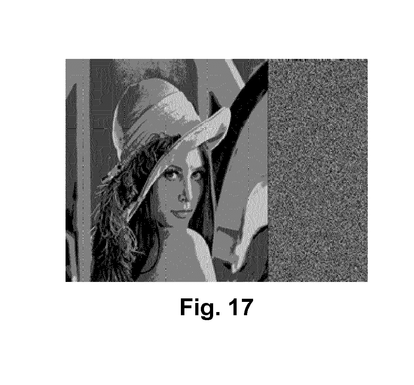

An example of such a coding scheme shall be discussed in the following with reference to Figs. 12 to 17.

Information to be stored on the film is the image shown in Fig. 12, which consists of 512 rows and 512 columns. Each pixel corresponds to eight bits. In the present example the goal is to store the image using two bits per pixel, i.e. to use a four-level modulation under the constraint that the original image can be perceived after printing on the film.

To deal with possible errors caused by scanning process, error correction is indispensable. On the other hand, to maintain the original image, a systematic ECC code is advantageous. As an example, a (171, 255) Reed-Solomon (RS) code defined over GF(2^8) is used, where the info word length is 171 and the code word length is 255. The corresponding minimum distance of the code is 85, meaning that this RS code can correct 42 byte errors for sure.

In the original image, there are 512 bytes in each row, which is divided into three parts with 171, 171, and 170 bytes, respectively. Let [u1,u2,u3] denote one row in the original image, where u1 and u2 have 171 bytes, whereas u3 has 170 bytes.

Encoding u1 with the RS(171,255) code generates a code word [u1,p1], where p1 denotes parity with 84 bytes. Similarly, encoding u2 results in [u2,p2]. Finally, appending a zero byte to u3 and encoding the result leads to [u3,0,p3], where '0' denotes a zero byte with 8 zero bits.

The resulting 255×3=765 bytes are rearranged as a new row, e.g. [u1,u2,u3,0,p1,p2 p3]. In this way the original row stays together as before. The resulting channel encoded image is depicted in Fig. 13. As can be seen, the left part of the image is the original image and the right part is parity information for later error correction decoding.

Again, assuming that two bits per pixel, i.e. a four-level modulation, is used for printing on film, each byte in the channel encoded image is mapped to four pixels.

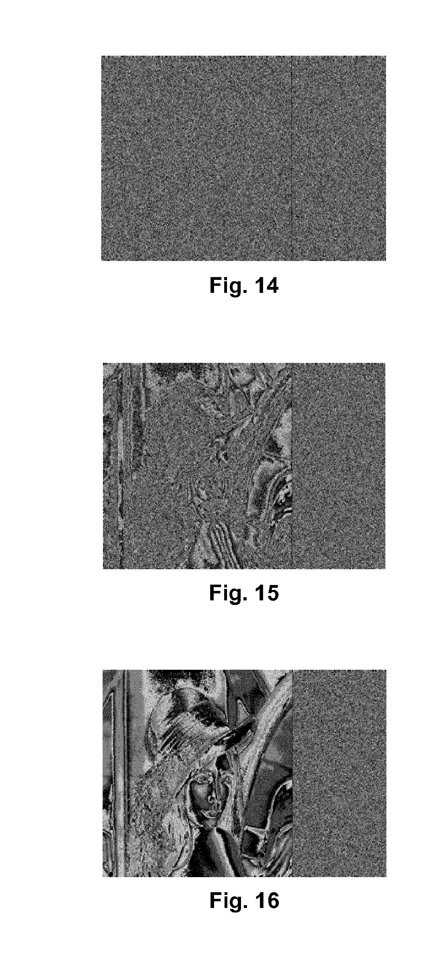

Let B=[b0,b1,b2,b3,b4,b5,b6,b7] denote a byte. One possible mapping from a byte to four pixels is to assign every two bits to a pixel, i.e. [b0,b1], [b2,b3], [b4,b5], and [b6,b7] are converted to four pixels. In this way four images are generated, which are shown in Figs. 14 to 17. These images are printed on the film. Although from the first two images one cannot perceive the original image, the last two do provide a perception of the original image.

## Claims

1. A method for storing data as a coded two-dimensional pattern (1, 6) of pixels (2) on a photographic medium (27), the method **comprising** the steps of:
- dividing (11) an image (3) representative of the data to be stored into a two-dimensional array of blocks (4);
- determining (12) a representative color value for each block (4) to obtain a two-dimensional array of representative blocks (5);
- coding (13) at least part of the data to be stored such that the resulting coded two-dimensional pattern (6) of pixels (2) resembles the two-dimensional array of representative blocks (5), and
- printing (14) the coded data onto the photographic medium (27).

2. The method according to claim 1, **wherein** the representative image (3) is one of an image to be stored, a selected image of a sequence of images to be stored, and an image describing the content of the data to be stored.

3. The method according to claim 1 or 2, **wherein** the representative color value of a block (4) is mean luminance value of the block.

4. The method according to one of the preceding claims, **wherein** the coded two-dimensional pattern (1, 6) of pixels (2) is one of a pattern of black and white pixels (2), a pattern of pixels (2) with different grey values, and a pattern of pixels (2) with different color values.

5. The method according to one of the preceding claims, **wherein** the resulting coded two-dimensional pattern (6) of pixels (2) resembles the two-dimensional array of representative blocks (5) in the sense that areas of the coded two-dimensional pattern (6) of pixels (2) have similar luminance mean values as the representative blocks (5) corresponding to these areas.

6. The method according to one of claims 1 to 5, **wherein** during coding a two-dimensional pattern (1) of pixels (2) resulting from channel modulation and error correction coding is superimposed on the two-dimensional array of representative blocks (5).

7. The method according to one of claims 1 to 5, **wherein** a special coding scheme is employed, which is chosen such that the mean-value of all code words representing the stored data in an area of the two-dimensional pattern (1) of pixels (2) corresponding to a block (4) equals or comes close to the representative color value of said block (4).

8. An apparatus (20) configured to store data as a coded two-dimensional pattern (1, 6) of pixels (2) on a photographic medium (27), the apparatus **comprising:**
- an image analyzer (23) configured to divide (11) an image (3) representative of the data to be stored into a two-dimensional array of blocks (4);
- a block analyzer (24) configured to determine (12) a representative color value for each block (4) to obtain a two-dimensional array of representative blocks (5);
- an encoder (25) configured to code (13) at least part of the data to be stored such that the resulting coded two-dimensional pattern (6) of pixels (2) resembles the two-dimensional array of representative blocks (5), and
- a data recorder (26) configured to print (14) the coded data onto the photographic medium (27).

9. A computer readable storage medium having stored therein instructions enabling storing data as a coded two-dimensional pattern (1, 6) of pixels (2) on a photographic medium (27), which when executed by a computer, cause the computer to:
- divide (11) an image (3) representative of the data to be stored into a two-dimensional array of blocks (4);
- determine (12) a representative color value for each block (4) to obtain a two-dimensional array of representative blocks (5);
- code (13) at least part of the data to be stored such that the resulting coded two-dimensional pattern (6) of pixels (2) resembles the two-dimensional array of representative blocks (5), and
- print (14) the coded data onto the photographic medium (27).
